# EUROPÄISCHE PATENTANMELDUNG

(11) **EP 1 155 983 A1**
(43) Veröffentlichungstag der Anmeldung: **21.11.2001**
(21) Anmeldenummer: 00110440.5
(22) Anmeldetag: 16.05.2000
(51) Int. Cl.: B65G 57/11, B65G 21/20

(54) **Plattenstapler**

(71) Anmelder: Albin Spitzke KG (GmbH & Co.), 22041 Hamburg (DE)
(72) Erfinder: Spitzke, Wolfgang, 22885 Barsbüttel (DE)
(74) Vertreter: Glawe, Delfs, Moll & Partner

(57) **Zusammenfassung**

Plattenstapler mit einem die zu stapelnden Platten (3) im Wesentlichen in der Richtung ihrer Flächenerstreckung einem Stapeltisch (5,6) zuführenden Förderer (10). Eine schonende Auflage der Platten (3) auf die Stapeloberseite (8) wird dadurch ermöglicht, daß der Förderer (10) zur hängenden Förderung der Platten (3) ausgebildet ist, insbesondere als Saugförderer.

## Beschreibung

Bekannte Plattenstapler führen die zu stapelnden Platten einzeln hintereinander auf einem horizontalen Förderband einer Stapeleinrichtung zu. Die vom Ende des Förderbandes abgeworfenen Platten fallen auf einen Stapeltisch, der entsprechend der wachsenden Stapelhöhe abgesenkt wird, bis die für den Stapel vorgesehenen Plattenzahl erreicht ist. Die Geschwindigkeit, mit der die Platten einem solchen Stapel zugeführt werden können, ist begrenzt wegen der mechanischen Beanspruchung, der die Platten beim Abwurf ausgesetzt sind. Dies gilt insbesondere für pastierte, zur Herstellung von Akkumulatoren vorgesehenen Bleiplatten, die im Laufe der Entwicklung immer dünner und damit anfälliger für Beschädigungen werden.

Wenn die Höhe des auf einem Stapeltisch befindlichen Stapels die vorgesehene Höhe erreicht hat und abgeführt werden muß, soll der Stapelvorgang nicht wesentlich unterbrochen werden. Bekannte Plattenstapler (DE-A 2705509) schieben deshalb während der Zeit des Abtransports des Stapels eine Zwischenstapelplatte über diesen. Sie nimmt einstweilen die anfallenden Platten auf, um sie später dem inzwischen entleerten Stapeltisch übergeben zu können. Dieses Prinzip läßt sich nicht verwirklichen ohne beträchtliche Fallhöhe zwischen dem Niveau des Förderers und der Oberfläche des Stapels beziehungsweise der Zwischenstapelplatte. Diese Fallhöhe führt zur beträchtlicher mechanischer Beanspruchung der Platten und begrenzt daher die Stapelgeschwindigkeit beziehungsweise ist nicht verwendbar bei dünnen oder empfindlichen Platten.

Der Erfindung liegt daher die Aufgabe zu Grunde, einen Plattenstapler gemäß dem Oberbegriff des Anspruchs 1 zu schaffen, der eine schonendere Übergabe der Platten vom Förderer an den Stapeltisch und gegebenenfalls auch einen schonenderen Wechsel des Stapels ermöglicht.

Die erfindungsgemäße Lösung besteht darin, daß der über den Stapeltisch geführte Förderer zur hängenden Förderung der Platten gebildet ist. Dies gibt die Möglichkeit, die Höhendistanz zwischen der Stapeloberseite und jeder ankommenden Platte sehr gering zu halten, indem der Stapeltisch jeweils nach dem Auflegen einer Platte um die Plattendicke abgesenkt wird. Die Höhendistanz kann bis auf nahezu null verringert werden, was die Möglichkeit schafft, die ankommenden Platten gleitend auf die Stapeloberseite aufzulegen. Ein freier Fall und harter Aufprall wird dadurch ganz oder teilweise vermieden. Wenn sie über eine begrenzte Distanz frei fallen, kann dafür gesorgt werden, daß sie parallel bleiben und sich dadurch sanft auflegen. Auch kann die Reibung zwischen der ankommenden Platte und der Stapeloberseite zum schonenden Abbremsen der ankommenden Platte genutzt werden.

Dabei kann es wichtig sein, daß die aufzulegende Platte zumindest mit Ihrer Vorderkante, vorzugsweise aber großflächig, auf der Stapeloberseite aufliegt, bevor sie ihre mit den übrigen Platten fluchtende Endstellung erreicht hat, die beispielsweise durch einen Anschlag bestimmt wird.

Der Förderer ist zweckmäßigerweise ein Saugförderer. Jedoch sind auch hängend tragende Förderer denkbar, die mit Greifern für die Platten versehen sind.

Die Platten müssen jeweils oberhalb eines Stapels beziehungsweise unter Berücksichtigung des Bremsweges ein wenig vor dem Stapel von dem Förderer gelöst werden. Dazu ist dem Förderer eine Löseeinrichtung zugeordnet. Wenn es sich um einen Saugförderer handelt, kann diese Löseeinrichtung so ausgebildet sein, daß sie die Saugkraft des Förderers mindert, so das diese nicht mehr ausreicht, die abzulegende Platte zu halten. Wenn eine rasche Lösung erwünscht ist, kann auch ein überatmosphärischer Druckimpuls vorgesehen werden, der kurzzeitig die Saugkraft ersetzt. Es kann auch eine mechanische Löseeinrichtung vorgesehen sein, d. h. eine Einrichtung, die auf die vom Förderer zu trennende Platte eine Kraft ausübt, die (zusammen mit dem Plattengewicht) die Haltekraft des Förderers übersteigt. Beispielsweise kann ein Stößelpaar vorgesehen sein, das auf die über den Saugförderer seitlich hinausragenden Ränder der Platte von oben einen Stoß ausübt. Eine andere Möglichkeit der Ausführung der Löseeinrichtung besteht darin, daß die Vorderkanten der Platte auf eine Keilfläche treffen, die sich gegenüber der Oberfläche des Förderers allmählich absenkt und dadurch die Vorderkante der Platte und dann auch den übrigen Teil der Platte von dem Förderer ablöst. Derartige mechanische Einrichtungen können mit Einrichtungen zur Verminderung der Saugkraft des Förderers kombiniert sein.

Bei einer bevorzugten Ausführung der Erfindung sind zwei im Wechsel zu betreibende Stapeltische in Förderrichtung hintereinander angeordnet. Es ist dann bei jedem Stapeltisch dem Förderer eine Löseeinrichtung zugeordnet. Die beiden Löseeinrichtungen werden dann je nachdem, welcher Stapeltisch aktiv ist, alternativ angesteuert. Dies ermöglicht den Wechsel der Stapeltische ohne Betriebspause.

In der Regel wird man den für den hängenden Transport der Platten ausgebildeten Förderer lediglich für die Übergabe der Platten von einem herkömmlichen Förderer auf den Stapeltisch beziehungsweise die Stapeltische verwenden.

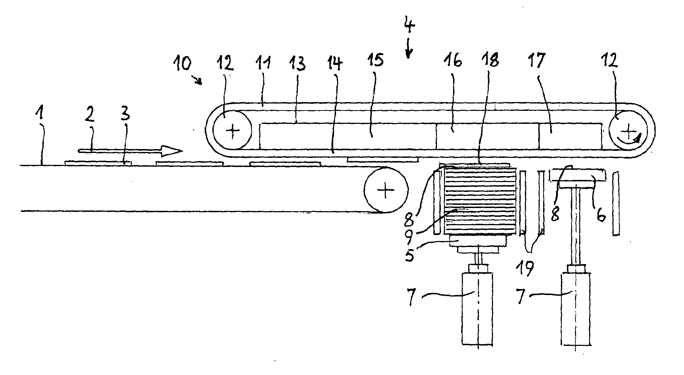

Die Erfindung wird im folgenden näher unter Bezugnahme auf die Zeichnung erläutert, die in einer schematischen Seitenansicht ein Ausführungsbeispiel veranschaulicht.

Ein Förderband 1 führt in Pfeilrichtung 2 pastierte Bleiplatten 3, die für Herstellung von Akkumulatoren bestimmt sind, einer Stapeleinrichtung 4 zu.

Die Stapeleinrichtung vier umfaßt zwei Stapeltische 5,6, die auf einer Einrichtung 7 zur Höhenverstellung ruhen. Es kann ein (nicht gezeigter) Sensor vorhanden sein, der dafür sorgt, daß die Stapeloberseite 8, die von der jeweils obersten gestapelten Platte oder der leeren Tischfläche gebildet ist, eine vorbestimmte Höhe aufweist. In manchen Fällen kann auch von einem Sensor abgesehen werden, wenn die jeweilige Höhe aus der Zahl der gestapelten Platten mit hinreichender Genauigkeit errechnet werden kann.

Die Höhenverstellung kann diskontinuierlich jeweils nach dem Auflegen einer Platte geschehen. Statt dessen ist es auch möglich, eine kontinuierliche Höhenverstellung vorzusehen, wenn die Platten in gleichmäßigem Zeitabstand zugeführt werden. Dabei kommt es darauf an, daß jeweils dann, wenn eine Platte auf die Oberseite 8 des Stapels 9 aufgelegt werden soll, die Oberseite 8 die richtige Höhe im Verhältnis zu der ankommenden Platte aufweist.

Die auf dem Förder eins herangeführten Platten 3 werden nicht unmittelbar sondern über Vermittlung eines Saugförderers 10 den Stapeltischen 5 beziehungsweise den darauf befindlichen Stapeln 9 übergeben. Der Saugförderer 10 besteht aus einem Luftdurchlässigen Band 11, das über Umlenkrollen 12 geführt ist, und einem Saugkasten 13, dessen offene Seite dem unterem Trum 14, des Bandes 11 zugewendet und von diesem abgeschlossen wird. Innerhalb des Saugkastens 13 sind eine erste Abteilung 15, eine zweite Abteilung 16 und eine dritte Abteilung 17 von einander abgetrennt, so das sie unterschiedliche Saugdrücke enthalten können.

Das untere Trum 14 wird in geringem oder ohne Abstand über dem Ablaufende des Bandes 1 geführt. Dabei ist der Unterdruck in dem Abschnitt 15 des Saugkastens 13 so eingestellt, daß die auf dem Förderband 1 ankommenden Platten von dem Saugförderer 10 angesaugt werden, am unteren Trum 14 des Bandes 11 haften bleiben und mit diesem auch nach dem Ende des Förderbandes 1 in Pfeilrichtung 2 weitergefördert werden. Solange die starke Saugkraft des Abschnitts 15 auf die am Untertrum 14 haftenden Platten 3 wirkt, sind sie sicher gehalten. Im dargestellten Beispiel ist der Stapeltisch 5 aktiv. Das bedeutet, das die ankommenden Platten auf diesem abgelegt werden sollen. Deshalb wird die Saugkraft im Abschnitt 16 des Saugkastens 13 so gemindert, daß die am Untertrum 14 haftenden Platten sich davon lösen, sobald sie sich oberhalb des Stapeltisches 5 befinden. In der Darstellung ist angenommen, daß sich auf Grund dieser Verringerung des Saugdrucks eine Platte 18 gelöst hat und sich nun mit einer gewissen Restgeschwindigkeit auf die Oberseite 8 des Stapels 9 auflegt. Dabei ist die Höhendistanz zwischen der Oberseite 8 des Stapels und der Höhe der ankommenden Platten 3 übertrieben groß gezeichnet. In der Praxis kann sie äußerst gering sein.

Die Ablösung der Platten von dem Untertrum 14 des Saugförderers kann in unterschiedlicher Weise geschehen. Dadurch kann gesteuert werden, wie sich die Platten jeweils auf den Plattenstapel 9 auflegen. Die einfachste Möglichkeit besteht darin, daß im Abschnitt 16 des Saugkastens 13 ständig Atmosphärendruck oder ein geringer, zum Halten der Platten nicht ausreichender Unterdruck herrscht. Die Platte wird sich dann, wenn sie den Abschnitt 16 erreicht, beginnend mit ihrer Vorderkante von dem Saugband lösen und während des Falls auf den Plattenstapel eine etwas nach vorne geneigte Stellung einnehmen, die wegen des geringen Höhenabstands äußerst gering sein kann, nämlich so gering, daß ein keiner Stelle der Platte Kräfte auftreten, die zu einer schädlichen Verformung führen. Diese Forderung ist im allgemeinen erfüllt, wenn der Winkel, unter dem sich die Platte mit ihrer Vorderkante an der Plattenunterseite 8 anlegt, kleiner als 5°, vorzugsweise kleiner als 2° ist. Dabei kann sich ein allmähliches Aufgleiten der Platte auf die Stapeloberseite 8 ergeben, die zum sanften Abbremsen beiträgt. Die genaue Einstellung des Ablösevorgangs gelingt durch die Einstellung des Drucks im Abschnitt 16. Je mehr er dem Atmosphärendruck angenähert ist, um so früher beginnt die Ablösung und umgekehrt.

Wünscht man, daß sich die Platte möglichst gleichmäßig vom Saugförderer löst, so kann man dies durch pulsierenden Druck im Abschnitt 16 des Saugkastens 13 erreichen. Man hält ihn solange niedrig(und die Saugkraft entsprechend hoch), solange die Platte am Saugförderer haften soll. So bald die sich lösen soll, sendet man einen Druckimpuls in den Abschnitt 16 (beispielsweise durch Öffnen eines Belüftungsventils), um anschließend wieder den Unterdruck zum Halten der folgenden Platte aufzubauen.

Wenn statt des Stapeltisches 5 der Stapeltisch 6 in Betrieb genommen werden soll, damit der Stapel 9 auf dem Stapeltisch 5 abgeführt werden kann, hält man im Abschnitt 16 den selben Saugdruck aufrecht wie in Abschnitt 15, während im Abschnitt 17 der Druck so gesteuert wird, wie dies zuvor mit Bezug auf Abschnitt 16 beschrieben wurde.

Es versteht sich, daß den Stapeltischen 5,6 Einrichtungen 19 zugeordnet sein können, die die Platten des Stapels ausrichten. Solche Einrichtungen sind zweckmäßigerweise nicht nur mit Wirkrichtung parallel zur Förderrichtung vorgesehen sondern auch quer dazu. Ferner können Anschläge vorgesehen sein, die die ankommenden Platten stapelgerecht festhalten. Diese Anschläge können federnd oder dämpfend ausgeführt sein, um den Stoß auf die Platten gering zu halten. Ein solcher dem Stapeltisch 5 zugeordneter Anschlag sollte derart steuerbar sein, daß er aus dem Förderweg der ankommenden Platten entfernt werden kann, sobald der in Förderrichtung weiter hinten liegende Stapeltisch 6 in Betrieb genommen wird.

## Patentansprüche

1. Plattenstapler mit einem die zu stapelnden Platten(3).im wesentlichen in der Richtung ihrer Flächenerstreckung einem Stapeltisch (5,6) zuführenden Förderer, **dadurch gekennzeichnet, daß** der über den Stapeltisch (5,6)geführte Förderer (10) zur hängenden Förderung der Platten (3) ausgebildet ist.

2. Plattenstapler nach Anspruch 1, **dadurch gekennzeichnet, daß** der Förderer (10) ein Saugförderer ist.

3. Plattenstapler nach Anspruch 1 oder 2, **dadurch gekennzeichnet, daß** der Förderer (10)eine über einem Stapeltisch (5,6) befindliche Löseeinrichtung (16,17) aufweist.

4. Plattenstapler nach Anspruch 3, **dadurch gekennzeichnet, daß** die Löseeinrichtung (16,17)zur Verringerung der die Platten (3) haltenden Saugkraft ausgebildet ist.

5. Plattenstapler nach Anspruch 3 oder 4 **dadurch gekennzeichnet, daß** die Löseeinrichtung eine Einrichtung zum mechanischen Trennen der Platten vom Saugförderer (10) umfaßt.

6. Plattenstapler nach einiger Ansprüche 1 bis 5 **dadurch gekennzeichnet, daß** zwei im Wechsel zu betreibende Stapeltische (5,6) in Förderrichtung hintereinander angeordnet sind und dem Förderer bei jedem Stapeltisch (5,6) eine Löseeinrichtung (16,17) zugeordnet ist.

7. Verfahren zum Betrieb des Plattenstaplers nach Einigung der Ansprüche 1 bis 6, **dadurch gekennzeichnet, daß** die ankommenden Platten(3) gleitend auf die Stapeloberseite (8) aufgelegt werden.
